# EUROPÄISCHE PATENTANMELDUNG

(11) **EP 4 756 146 A1**
(43) Veröffentlichungstag der Anmeldung: **10.06.2026**
(21) Anmeldenummer: 25219554.0
(22) Anmeldetag: 28.11.2025
(51) Int. Cl.: E04D 1/18, E04D 1/00, E04D 1/30, E04D 1/34, E04D 3/16, E04D 3/361, E04D 3/365, H02S 20/23

(54) **DACHPLATTE**

(30) Priorität: 03.12.2024 DE 102024135959
(71) Anmelder: SL Rack GmbH, 83527 Haag (DE)
(72) Erfinder: Rohrmüller, Thomas, 83125 Eggstätt (DE)
(74) Vertreter: Lichtnecker, Markus Christoph

(57) **Zusammenfassung**

Die Erfindung betrifft eine Dachplatte, aufweisend eine, vorzugsweise rechteckige, Grundfläche mit einem Abdeckbereich zum Abdecken eines ziegelfreien Dachbereichs und mit zwei Auflagebereichen zum Auflegen von Dachziegeln, wobei die Auflagebereiche an gegenüberliegenden Seiten des Abdeckbereichs angeordnet sind, zwei, vorzugsweise rechtwinklig, über die Grundfläche auskragende Stege, wobei zwischen den Auflagebereichen und dem Abdeckbereich jeweils ein Steg vorgesehen ist, und wenigstens einen, vorzugsweise rechtwinklig, über die Grundfläche auskragenden Einhängeabschnitt, der an einer kurzen Stirnseite eines Auflage-bereichs vorgesehen ist, wobei der Einhängeabschnitt in dieselbe Richtung wie die Stege auskragt.

## Beschreibung

Die Erfindung betrifft eine Dachplatte, aufweisend eine, vorzugsweise rechteckige, Grundfläche mit einem Abdeckbereich zum Abdecken eines ziegelfreien Dachbereichs und mit zwei Auflagebereichen zum Auflegen von Dachziegeln, wobei die Auflagebereiche an gegenüberliegenden Seiten des Abdeckbereichs angeordnet sind.

Ferner weist die Dachplatte zwei, vorzugsweise rechtwinklig, über die Grundfläche auskragende Stege auf, wobei zwischen den Auflagebereichen und dem Abdeckbereich jeweils ein Steg vorgesehen ist.

Eine derartige Dachplatte ist beispielsweise aus DE 20 2024 100 540 U1 bekannt. Der Inhalt der DE 20 2024 100 540 U1 wird - vor allem in Hinblick auf die Ausführbarkeit und/oder mögliche Ausgestaltungen der Erfindung - vollständig in diese Anmeldung mit einbezogen.

Nachteilig an der DE 20 2024 100 540 U1 ist, dass zur Befestigung an einer Traglattung eine Durchtrittsöffnung vorgesehen ist. Die Dachplatte wird an dieser Durchtrittsöffnung über einen Nagel oder eine Schraube an der Traglattung befestigt. Dadurch gestaltet sich die Montage vergleichsweise aufwändig, da stets ein Werkzeug, z.B. ein Hammer oder ein Akkuschrauber, mitgeführt werden muss.

Es ist daher eine Aufgabe der Erfindung, eine Dachplatte der eingangs genannten Art dahingehend zu verbessern, dass die Montage werkzeuglos erfolgen kann.

Die Lösung dieser Aufgabe erfolgt durch den Gegenstand mit den Merkmalen des unabhängigen Anspruchs.

Erfindungsgemäß weist die Dachplatte eine, vorzugsweise rechteckige, Grundfläche auf.

Die Länge kann beispielsweise zwischen 10 cm und 100 cm, vorzugsweise zwischen 40 cm und 50 cm, z.B. 45 cm, betragen. Die Breite kann zum Beispiel zwischen 10 cm und 50 cm, vorzugsweise zwischen 20 cm und 30 cm, z.B. 27 cm, betragen.

Beispielsweise kann die Grundfläche plan oder geriffelt sein.

Die Grundfläche weist einen Abdeckbereich zum Abdecken eines ziegelfreien Dachbereichs und zwei Auflagebereiche zum Auflegen von Dachziegeln auf.

Der Abdeckbereich kann einen Bereich des Dachs abdecken, welcher, z.B. zur Montage eines Solar- und/oder Photovoltaikmoduls, keine Dachziegel aufweist.

Die Dachplatte ist gewissermaßen eine Dachersatzplatte.

Vorzugsweise ist der Abdeckbereich rechteckig.

Beispielsweise kann die Breite des Abdeckbereichs zwischen 10 cm und 20 cm, z.B. 16 cm, betragen.

Die Auflagebereiche können zum Beispiel rechteckig ausgebildet sein. Vorzugsweise sind die Auflagebereiche gleich groß und/oder baugleich.

Beispielsweise kann die Breite der Auflagebereiche jeweils zwischen 2 cm und 10 cm, z.B. 5 cm, betragen.

Die Auflagebereiche sind an gegenüberliegenden Seiten des Abdeckbereichs angeordnet.

Dachziegel können auf die Auflagebereiche gelegt werden. So wird die Dachplatte von oben gesichert.

Die Dachplatte weist zwei, vorzugsweise rechtwinklig, über die Grundfläche auskragende Stege auf.

Die Stege kragen im montierten Zustand vorzugsweise nach oben bzw. vorne aus.

Beispielsweise kann die Höhe der Stege zwischen 1 cm und 5 cm, z.B. 3 cm, betragen.

Zwischen den Auflagebereichen und dem Abdeckbereich ist jeweils ein Steg vorgesehen.

Auf einen Auflagebereich folgt somit ein Steg, darauf folgen der Abdeckbereich, ein weiterer Steg und ein weiterer Auflagebereich.

Folglich sind die Auflagebereiche durch die Stege vom Abdeckbereich getrennt.

Die Stege dienen als Windbrecher und Verhindern das Eindringen und/oder Sammeln von Verschmutzungen.

Vorzugsweise sind die Stege parallel zueinander orientiert und/oder erstrecken sich über die gesamte Länge der Dachplatte.

Die Dachplatte weist wenigstens einen, vorzugsweise rechtwinklig, über die Grundfläche auskragenden Einhängeabschnitt auf, der an einer kurzen Stirnseite eines Auflagebereichs vorgesehen ist.

Im montierten Zustand ist der Einhängeabschnitt an der oberen Stirnseite vorgesehen.

Der Einhängeabschnitt kragt in dieselbe Richtung wie die Stege aus, im montierten Zustand also vorzugsweise nach oben bzw. vorne.

Beispielsweise kann die Höhe des Einhängeabschnitts zwischen 0,5 cm und 5 cm, z.B. 1,5 cm, betragen.

Über den Einhängeabschnitt kann die Dachplatte vorzugsweise an einem benachbarten und/oder an einem auf dem Auflagebereich aufliegenden Dachziegel eingehängt werden.

Die Montage der Dachplatte kann daher werkzeuglos erfolgen.

Die Dachplatte ist darüber hinaus automatisch richtig positioniert. Beispielsweise liegt diese ohne Abstand an einer darüberliegenden Konstruktion, z.B. einem Dachzielgel, einer Montageschiene und/oder einem Dachhaken für ein Solar- und/oder Photovoltaikmodul an. So wird ein Eindringen von Verschmutzungen und/oder Regenwasser vermieden.

Vorzugsweise umfasst die Grundfläche ein Metallmaterial oder besteht daraus. Bei der Dachplatte kann es sich somit zum Beispiel um eine Metallplatte handeln.

Die Stege und/oder der Einhängeabschnitt können vorzugsweise ebenfalls ein Metallmaterial umfassen oder daraus bestehen. Alternativ oder zusätzlich ist beispielsweise auch ein Kunststoffmaterial denkbar.

Optional kann an der dem Einhängeabschnitt gegenüberliegenden, im montierten Zustand unteren Stirnseite der Grundfläche ein Dichtabschnitt vorgesehen sein. Der Dichtabschnitt kann beispielsweise ein Schaumstoff-, ein Gummi- und/oder ein flexibles Metallmaterial, z.B. Blei, aufweisen oder daraus bestehen. Dadurch kann eine Dichtung und/oder Anpassung an einen darunterliegenden Dachziegel erfolgen.

Weiterbildungen der Erfindung sind auch den abhängigen Ansprüchen, der Beschreibung sowie den beigefügten Zeichnungen zu entnehmen.

Gemäß einer Ausführungsform ist an jedem Auflagebereich ein Einhängeabschnitt vorgesehen.

Vorzugsweise sind die beiden Einhängeabschnitte baugleich ausgebildet.

Die Dachplatte kann somit an beiden Seiten an einem Dachziegel eingehängt werden. Alternativ kann je nach Bedarf lediglich einer der Einhängeabschnitte genutzt werden. Die Dachplatte kann daher vielseitig eingesetzt werden.

Nach einer weiteren Ausführungsform ist der Einhängeabschnitt plattenförmig ausgebildet.

Eine Platte bietet eine vergleichsweise große Auflagefläche beim Einhängen am Dachziegel.

Vorzugsweise ist der Einhängeabschnitt schmäler als die Breite des Auflagebereichs. Auf diese Weise kann Material eingespart werden.

Die Breite kann z.B. zwischen 1 cm und 5 cm, z.B. 3 cm, betragen.

Beispielsweise kann der Einhängeabschnitt eine Einhängenase bilden.

Gemäß einer weiteren Ausführungsform ist der Einhängeabschnitt rechtwinklig zu den Stegen orientiert.

Ein Dachziegel kann daher beispielsweise an zwei Seiten zumindest teilweise umrahmt werden.

Beispielsweise kann ein Abstand zwischen dem Einhängeabschnitt und dem benachbarten Steg vorgesehen sein. Auf diese Weise kann dazwischen Wasser ablaufen.

Nach einer weiteren Ausführungsform ist der Einhängeabschnitt als Abkantung ausgebildet.

Beispielsweise kann ein oberer Abschnitt des Auflagebereichs bei der Herstellung umgebogen und/oder abgekantet werden.

Dadurch gestaltet sich die Herstellung kostengünstig.

Gemäß einer weiteren Ausführungsform sind die Grundfläche und der Einhängeabschnitt einstückig ausgebildet.

Dadurch wird ein sicherer Halt zwischen der Grundfläche und dem Einhängeabschnitt gewährleistet.

Alternativ können die Grundfläche und der Einhängeabschnitt auch nachträglich miteinander verbunden, z.B. verschweißt, verschraubt und/oder verklebt, werden.

Nach einer weiteren Ausführungsform sind die Grundfläche und die Stege einstückig ausgebildet.

Beispielsweise können die Stege bei der Herstellung gefalzt und/oder abgekantet werden.

Dadurch wird ein sicherer Halt zwischen der Grundfläche und den Stegen gewährleistet.

Alternativ können die Grundfläche und die Stege auch nachträglich miteinander verbunden, z.B. verschweißt, verschraubt und/oder verklebt, werden.

Gemäß einer weiteren Ausführungsform sind an, den Stegen gegenüberliegenden, Endbereichen der Auflagebereiche Erhebungen vorgesehen.

Vorzugsweise erstrecken sich die Erhebungen über die gesamte Länge der Dachplatte.

Die Erhebungen dienen beispielsweise als Führung für Regenwasser.

Die Grundfläche und die Erhebungen können vorzugsweise einstückig ausgebildet sein.

Beispielsweise können die Erhebungen bei der Herstellung gefalzt und/oder abgekantet werden.

Dadurch wird ein sicherer Halt zwischen der Grundfläche und den Erhebungen gewährleistet.

Alternativ können die Grundfläche und die Erhebungen auch nachträglich miteinander verbunden, z.B. verschweißt, verschraubt und/oder verklebt, werden.

Nach einer weiteren Ausführungsform sind der Abdeckbereich und die Auflagebereiche in derselben Ebene angeordnet.

Alternativ können diese Bereiche auch in unterschiedlichen Ebenen angeordnet sein, wie es z.B. in DE 20 2024 100 540 U1 beschrieben wird.

Gemäß einer weiteren Ausführungsform ist die Grundfläche öffnungsfrei.

Aufgrund des Einhängeabschnitts ist es nicht erforderlich, dass die Grundfläche zur Montage eine Durchtrittsöffnung für einen Nagel oder eine Schraube aufweist.

Die Grundfläche ist somit dicht und es kann keine Flüssigkeit hindurchdringen.

Alle hier beschriebenen Aspekte, Ausführungsformen und Merkmale der Erfindung können, vorzugsweise auch losgelöst von der konkreten Ausgestaltung, in deren Zusammenhang sie erwähnt werden, jeweils miteinander kombiniert werden. Vorzugsweise können alle Gegenstände der abhängigen Ansprüche untereinander und mit dem Gegenstand des unabhängigen Anspruchs kombiniert werden.

Generell wird bemerkt, dass Begriffe wie "ein" bzw. "eine" nicht zwingend "genau ein" bzw. "genau eine" bedeuten, wobei dies ebenso möglich ist. Die Begriffe "ein" bzw. "eine" können daher als "mindestens oder genau ein" bzw. "mindestens oder genau eine" verstanden werden. Die Verwendung des Singulars schließt vorzugsweise das Vorliegen der Bauteile im Plural mit ein und umgekehrt.

Es wird festgehalten, dass "vorzugsweise" und "bevorzugt" als "preferably" auf Englische übersetzt werden können. Ein durch "vorzugsweise" oder "bevorzugt" eingeleitetes Merkmal ist rein fakultativ, kann weggelassen werden und stellt keine Einschränkung, beispielsweise der Ansprüche, dar.

Die Erfindung wird im Folgenden beispielhaft unter Bezugnahme auf die Zeichnungen beschrieben. Es zeigen:
- Fig. 1: eine Perspektivansicht einer Ausführungsform einer erfindungsgemäßen Dachplatte, und
- Fig. 2: eine seitliche Schnittansicht der Dachplatte gemäß Fig. 1,
- Fig. 3: eine vergrößerte Darstellung des Teilbereichs B gemäß Fig. 2,
- Fig. 4: eine Draufsicht der Dachplatte gemäß Fig. 1,
- Fig. 5: eine Vorderansicht der Dachplatte gemäß Fig. 1,
- Fig. 6: eine vergrößerte Darstellung des Teilbereichs C gemäß Fig. 5, und
- Fig. 7 bis 9: Perspektivansichten einer Ausführungsform einer erfindungsgemäßen Dachplatte im teilmontierten Zustand.

Zunächst ist zu bemerken, dass die dargestellten Ausführungsformen rein beispielhafter Natur sind. So können einzelne Merkmale nicht nur in der gezeigten Kombination, sondern auch in Alleinstellung oder in anderen technisch sinnvollen Kombinationen realisiert sein. Beispielsweise können die Merkmale einer Ausführungsform beliebig mit Merkmalen einer anderen Ausführungsform kombiniert werden. Die Anzahl, Breite, Form und/oder Position der Einhängeabschnitte ist grundsätzlich beliebig.

Enthält eine Figur ein Bezugszeichen, welches im unmittelbar zugehörigen Beschreibungstext nicht erläutert wird, so wird auf die entsprechenden vorhergehenden bzw. nachfolgenden Ausführungen in der Figurenbeschreibung Bezug genommen. So werden für gleiche bzw. vergleichbare Bauteile in den Figuren dieselben Bezugszeichen verwendet und diese nicht nochmals erläutert.

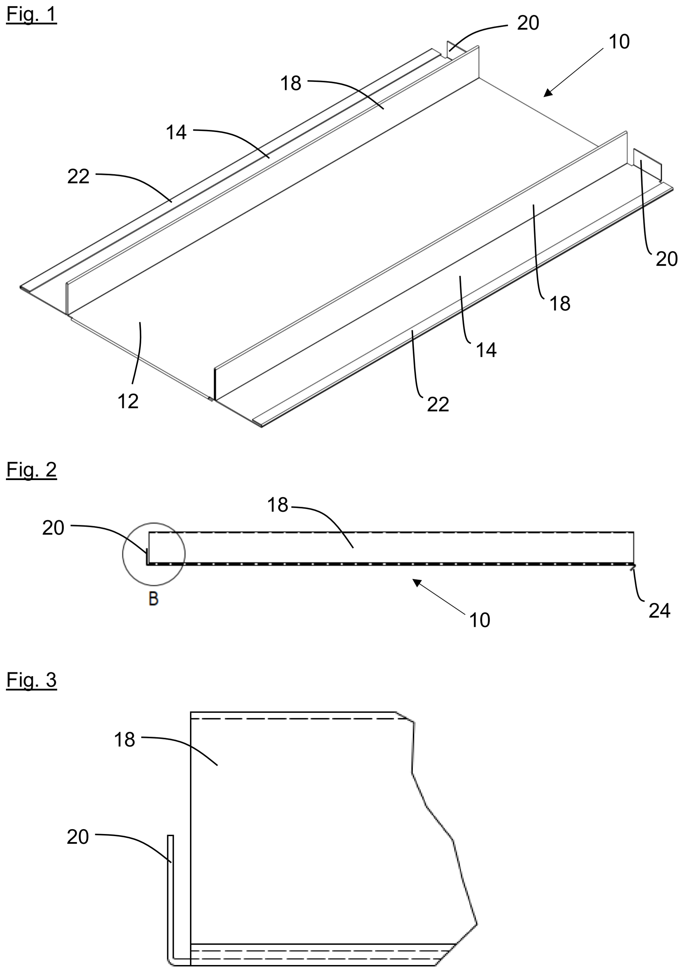

Fig. 1 zeigt eine Dachplatte mit einer, z.B. rechteckigen und/oder öffnungsfreien, Grundfläche 10.

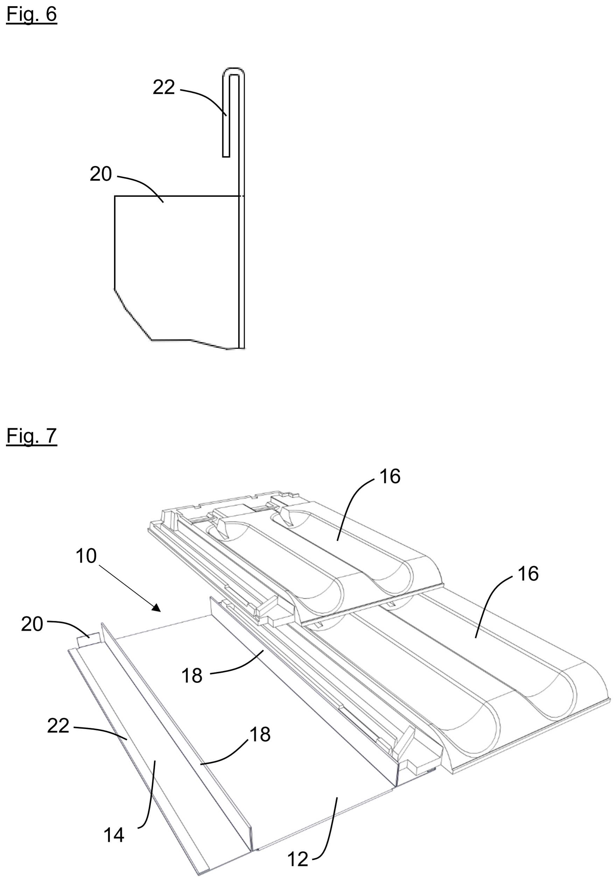

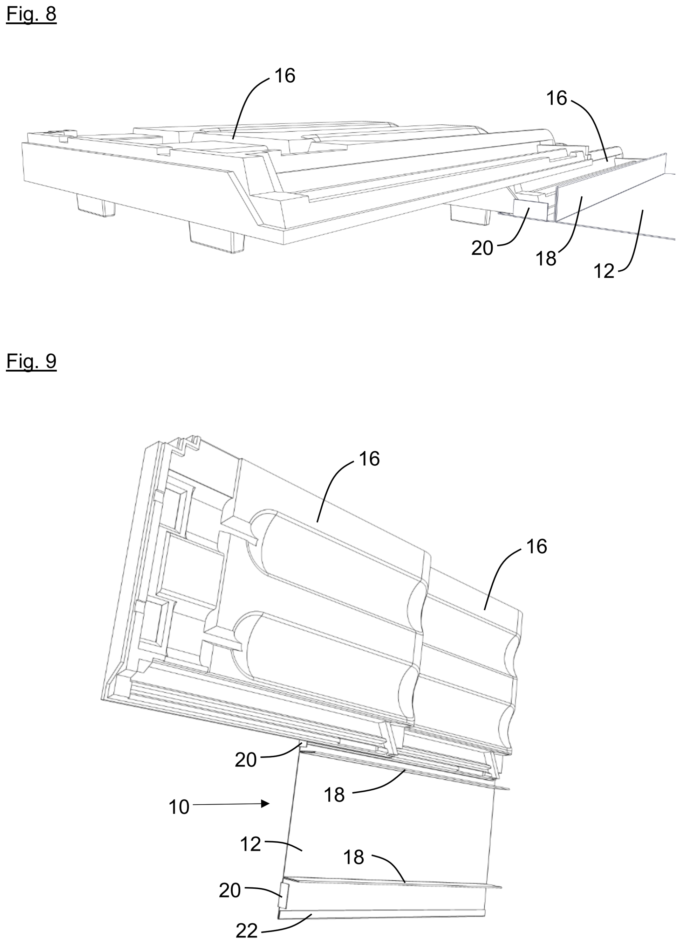

Die Grundfläche 10 weist einen, vorzugsweise zentralen, Abdeckbereich 12 zum Abdecken eines ziegelfreien Dachbereichs sowie zwei Auflagebereiche 14 zum Auflegen von Dachziegeln 16 (siehe Fig. 7 bis 9) auf.

Die, z.B. rechteckigen, Auflagebereiche 14 sind an gegenüberliegenden Seiten des Abdeckbereichs 12 angeordnet.

Vorzugsweise liegen die Auflagebereiche 14 und der Abdeckbereich 12 in derselben Ebene.

Zwischen den Auflagebereichen 14 und dem Abdeckbereich 12 ist jeweils ein Steg 18 vorgesehen. Der Abdeckbereich 12 bildet mit den beiden Stegen 18 einen Ablauf für Regenwasser.

Die Stege 18 kragen, z.B. rechtwinklig, über die Grundfläche 10 aus und erstrecken sich vorzugsweise über die gesamte Länge der Grundfläche 10.

An den kurzen Stirnseiten der Auflagebereiche 14 ist jeweils ein, z.B. plattenförmiger, Einhängeabschnitt 20 vorgesehen. Die Einhängeabschnitte 20 kragen in dieselbe Richtung wie die Stege 18 - also im montierten Zustand nach oben bzw. vorne - aus.

Die Einhängeabschnitte 20 sind beispielsweise rechtwinklig zu den Stegen 18 orientiert. Vorzugsweise ist ein gewisser Abstand zwischen den Einhängeabschnitten 20 und den benachbarten Stegen 18 vorgesehen.

An den außenseitigen Endbereichen der Auflagebereiche 14, also den Endbereichen, welche den Stegen 18 gegenüber liegen, sind Erhebungen 22 vorgesehen.

Die Auflagebereiche 14 bildet mit jeweils einem Steg 18 und einer Erhebung 22 einen Ablauf für Regenwasser.

Vorzugsweise ist die Dachplatte achsensymmetrisch ausgebildet.

Die Stege 18, Einhängeabschnitte 20 und Erhebungen 22 sind z.B. einstückig mit der Grundfläche 10 ausgebildet. Beispielsweise können diese gefalzt und/oder abgekantet sein.

Fig. 2 und 3 zeigen eine seitliche Schnittansicht der Dachplatte. Der Einhängeabschnitt 20 ist hierbei nach oben hin abgekantet.

Der Einhängeabschnitt 20 kann von der Grundfläche 10 beabstandet sein. Beispielsweise kann der Abstand zwischen 0,1 cm und 0,5 cm, z.B. 0,2 cm, betragen.

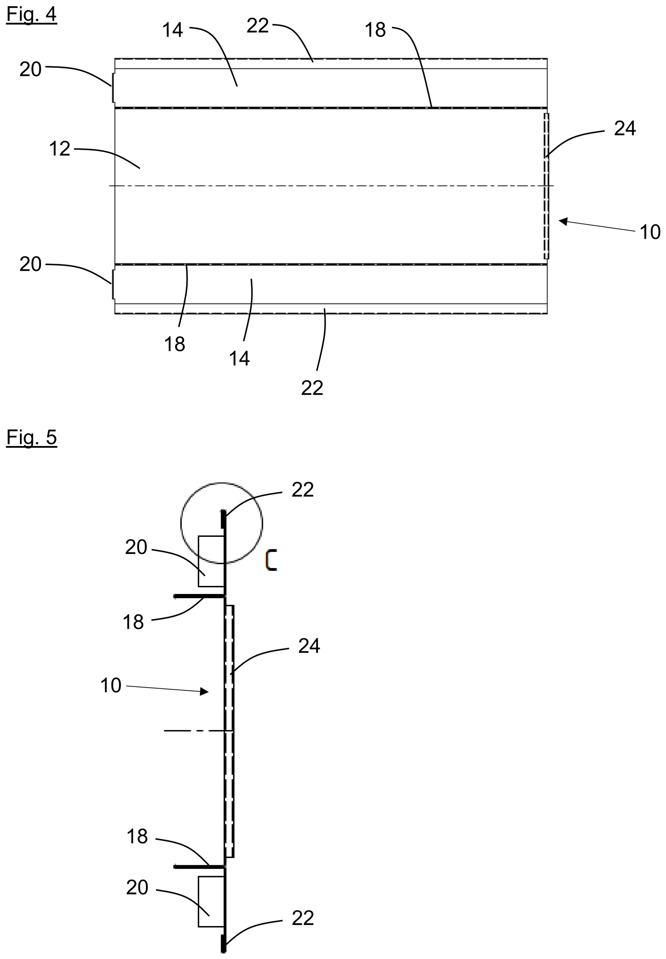

In Fig. 4 ist eine Draufsicht der Dachplatte gezeigt.

Optional kann an der den Einhängeabschnitten 20 gegenüberliegenden, im montierten Zustand unteren Stirnseite der Grundfläche 10 ein Befestigungsabschnitt 24 vorgesehen sein.

Am Befestigungsabschnitt 24 kann beispielsweise ein Dichtabschnitt befestigt werden. Hierzu kann der Befestigungsabschnitt 24 z.B. eine hakenförmig gebogene Lasche aufweisen, welche zusammengedrückt werden kann, um den Dichtabschnitt daran festzuklemmen.

Fig. 5 und 6 zeigen Vorderansichten der Dachplatte.

Die Erhebungen 22 können beispielsweise gefalzt sein.

In Fig. 7 bis 9 ist die Dachplatte im teilmontierten Zustand dargestellt.

Zur besseren Sichtbarkeit liegen lediglich auf einer Seite der Dachplatte Dachziegel 16 auf. Im vollständig montierten Zustand liegen dann auf beiden Auflagebereichen 14 jeweils Dachziegel 16 auf.

Der Einhängeabschnitte 20 hängt sich an einer oberen Stirnseite des Dachziegels 16 ein und wird somit sicher gehalten. Eine zusätzliche Fixierung, beispielsweise an einer Dachlatte mittels Schrauben, ist nicht notwendig.

Die Montage gestaltet sich äußerst schnell und einfach, zumal auch kein Werkzeug notwendig ist.

### Bezugszeichenliste

- 10: Grundfläche
- 12: Abdeckbereich
- 14: Auflagebereich
- 16: Dachziegel
- 18: Steg
- 20: Einhängeabschnitt
- 22: Erhebung
- 24: Befestigungsabschnitt

## Patentansprüche

1. Dachplatte, aufweisend
eine, vorzugsweise rechteckige, Grundfläche (10) mit einem Abdeckbereich (12) zum Abdecken eines ziegelfreien Dachbereichs und mit zwei Auflagebereichen (14) zum Auflegen von Dachziegeln (16), wobei die Auflagebereiche (14) an gegenüberliegenden Seiten des Abdeckbereichs (12) angeordnet sind,
zwei, vorzugsweise rechtwinklig, über die Grundfläche (10) auskragende Stege (18), wobei zwischen den Auflagebereichen (14) und dem Abdeckbereich (12) jeweils ein Steg (18) vorgesehen ist, und
wenigstens einen, vorzugsweise rechtwinklig, über die Grundfläche (10) auskragenden Einhängeabschnitt (20), der an einer kurzen Stirnseite eines Auflagebereichs (14) vorgesehen ist, wobei der Einhängeabschnitt (20) in dieselbe Richtung wie die Stege (18) auskragt.

2. Dachplatte nach Anspruch 1,
**dadurch gekennzeichnet,**
**dass** an jedem Auflagebereich (14) ein Einhängeabschnitt (20) vorgesehen ist.

3. Dachplatte nach Anspruch 1 oder 2,
**dadurch gekennzeichnet,**
**dass** der Einhängeabschnitt (20) plattenförmig ausgebildet ist.

4. Dachplatte nach einem der vorhergehenden Ansprüche,
**dadurch gekennzeichnet,**
**dass** der Einhängeabschnitt (20) rechtwinklig zu den Stegen (18) orientiert ist.

5. Dachplatte nach einem der vorhergehenden Ansprüche,
**dadurch gekennzeichnet,**
**dass** der Einhängeabschnitt (20) als Abkantung ausgebildet ist.

6. Dachplatte nach einem der vorhergehenden Ansprüche,
**dadurch gekennzeichnet,**
**dass** die Grundfläche (10) und der Einhängeabschnitt (20) einstückig ausgebildet sind.

7. Dachplatte nach einem der vorhergehenden Ansprüche,
**dadurch gekennzeichnet,**
**dass** die Grundfläche (10) und die Stege (18) einstückig ausgebildet sind.

8. Dachplatte nach einem der vorhergehenden Ansprüche,
**dadurch gekennzeichnet,**
**dass** an, den Stegen (18) gegenüberliegenden, Endbereichen der Auflagebereiche (14) Erhebungen (22) vorgesehen sind.

9. Dachplatte nach einem der vorhergehenden Ansprüche,
**dadurch gekennzeichnet,**
**dass** der Abdeckbereich (12) und die Auflagebereiche (14) in derselben Ebene angeordnet sind.

10. Dachplatte nach einem der vorhergehenden Ansprüche,
**dadurch gekennzeichnet,**
**dass** die Grundfläche (10) öffnungsfrei ist.
